# EUROPÄISCHE PATENTSCHRIFT

(11) **EP 2 172 913 B1**
(45) Veröffentlichungstag und Bekanntmachung des Hinweises auf die Patenterteilung: **13.07.2011**
(21) Anmeldenummer: 09012523.8
(22) Anmeldetag: 02.10.2009
(51) Int. Cl.: G07F 7/10

(54) **Personalisieren von portable Datenträgern**
Personalisation of portable data carriers
Personnalisation de supports de données portables

(30) Priorität: 06.10.2008 DE 102008050578
(43) Veröffentlichungstag der Anmeldung: 07.04.2010
(73) Patentinhaber: Giesecke & Devrient GmbH, 81677 München (DE)
(72) Erfinder: Eckardt, Stefan, 82291 Mammendorf (DE)
(74) Vertreter: Vierheilig, Achim

(56) Entgegenhaltungen:
- EP-A- 1 873 728
- DE-A1- 10 328 238
- DE-A1- 19 939 280
- EMVCO: "EMV Card Personalization Specification"[Online] Nr. 1.1, Juli 2007 (2007-07), XP002563128 Gefunden im Internet: URL:http://www.emvco.com/specifications.as px?id=20> [gefunden am 2010-01-11]

## Beschreibung

Die vorliegende Erfindung betrifft ein Verfahren zum Personalisieren von portablen Datenträgern sowie einen entsprechend eingerichteten Datenträger.

Der Herstellungsprozess eines portablen Datenträgers, z.B. einer Chipkarte, umfasst in der Regel mehrere Phasen. Dabei wird in einer Phase eine gesamte Charge gleichartiger Datenträger mit solchen elektronischen Daten ausgestattet, die für die gesamte Charge identisch sind. Diese Phase wird auch "Initialisierungsphase" und diese Daten auch "Initialisierungsdaten" genannt. Sie betreffen z.B. Ergänzungen eines Betriebssystems des Datenträgers, Dateistrukturen und dergleichen. In einer weiteren ase, der so genannten "Personalisierungsphase", werden die einzelnen Datenträger mit so genannten Personalisierungsdaten ausgestatten, welche die einzelnen Datenträger im Hinblick auf ihren späteren Nutzer individualisieren. Dies können beispielsweise dem späteren Nutzer zugeordnete Applikationen, Zugangscodes, kryptographische Schlüssel oder dergleichen sein.

Es ist ein beständiges Ziel, den zeitlichen Aufwand für die Personalisierungsphase zu verringern. Auf diese Weise können Produktionszeit - und dadurch unmittelbar auch Produktionskosten - eingespart werden.

In der DE 103 28 238 A1 wird beispielsweise beschrieben, Personalisierungsdaten in komprimierter Form auf den Datenträger zu übertragen, um so aufgrund des verringerten Datenvolumens in Folge der Komprimierung weniger Übertragungszeit zu benötigen. Weiterhin wird vorgeschlagen, ein im Vergleich zu einem Standardprotokoll vereinfachtes Datenübertragungsprotokoll einzusetzen, um die Personalisierungskommandos mit den zugehörigen Personalisierungsdaten mit geringerem Aufwand auf den Datenträger zu übertragen.

Das Personalisierungssystem der DE 199 39 280 A1 sendet im Rahmen der Personalisierung von Karten eine Folge von gleichartigen Personalisierungskommandos mit Personalisierungsdaten an die Karte. Aus Sicherheitsgründen werden die Adressen für die Personalisierungsdaten in einer vorgelagerten Phase der Initialisierung als verkettete Liste auf die Karte übertragen.

Aufgabe der vorliegenden Erfindung ist es demnach, die Personalisierungsphase eines portablen Datenträgers weiter zu verkürzen.

Diese Aufgabe wird durch ein Verfahren und einen Datenträger mit den Merkmalen der unabhängigen Ansprüche gelöst. Vorteilhafte Ausgestaltungen und Weiterbildungen sind in den abhängigen Ansprüchen angegeben.

Die vorliegende Erfindung basiert auf der Idee, einen benutzerunabhängigen Anteil der Personalisierungskommandos getrennt von den zugehörigen benutzerabhängigen Personalisierungsdaten, d.h. in jeweils separaten Schritten, auf den Datenträger zu übertragen.

Gemäß einem erfindungsgemäßen Verfahren in einem portablen Datenträger zur Personalisierung des Datenträgers werden in einem ersten Schritt in dem Datenträger unvollständige Personalisierungskommandos empfangen. In einem separaten zweiten Schritt werden, getrennt von den unvollständigen Personalisierungskommandos, in dem Datenträger Personalisierungsdaten empfangen. Die Personalisierungsdaten werden in einem dritten Schritt zur Personalisierung des Datenträgers verarbeitet, indem die unvollständigen Personalisierungskommandos mit den Personalisierungsdaten ergänzt und die ergänzten Personalisierungskommandos ausgeführt werden.

Auf diese Weise ist es möglich, diejenige Phase, in der die Personalisierungsdaten - getrennt von den unvollständigen Personalisierungskommandos - durch den Datenträger empfangen und gespeichert werden, dadurch zu beschleunigen, dass während dieser Phase praktisch ausschließlich Personalisierungsdaten, jedoch (abgesehen von eventuell notwendigen Protokolldaten zur Datenübertragung und dergleichen) keine benutzerunabhängigen, unvollständigen Personalisierungskommandos auf den Datenträger übertragen werden. Dadurch verringert sich das zu übertragende Datenvolumen während dieser kommunikationsintensiven Phase. Die Zeit, die für die Datenübertragung von Daten auf den Datenträger in der Personalisierungsphase benötigt wird, verringert sich entsprechend dem weggefallenen Anteil der erfindungsgemäß in dem zweiten, benutzerspezifischen Empfangsschritt nicht mehr zu übertragenden unvollständigen Personalisierungskommandos. Die Personalisierungsphase des Datenträgers kann damit effektiv verkürzt werden. Es wird ausgenutzt, dass die benutzerunabhängigen, unvollständigen Personalisierungskommandos in einem standardisierten, datenträgerübergreifenden Prozess in viele Datenträger nahezu gleichzeitig eingeschrieben werden können. Die von der vorliegenden Erfindung erzielte Effizienzsteigerung ist also umso größer, je mehr benutzerunabhängige Daten in einem standardisierten und datenträgerübergreifenden Prozess eingeschrieben werden können.

Im Sinne der vorliegenden Erfindung dienen die Personalisierungskommandos lediglich zum Aufrufen von den Personalisierungskommandos zugeordneten Funktionalitäten, welche ihrerseits als ausführbare Applikationen auf dem Datenträger gespeichert sind. Ein Personalisierungskommando selbst enthält also keinen ausführbaren Code oder dergleichen, sondern lediglich Daten, die ein Betriebssystem des Datenträgers veranlassen, die dem Personalisierungskommando zugeordnete Funktionalität zu starten. Ein unvollständiges Personalisierungskommando umfasst keine benutzerspezifischen Datenanteile, sondern dient lediglich dazu, den Datenträger dadurch zu personalisieren, dass Personalisierungsdaten, welche die benutzerspezifischen Datenanteile umfassen und welche das unvollständige Personalisierungskommando zu einen vollständigen Kommando ergänzen, mittels einer durch das Personalisierungskommando aufgerufenen und dem unvollständigen Personalisierungskommando zugeordneten Funktionalität geeignet verarbeitet werden.

Ein vollständiges Personalisierungskommando im Sinne der vorliegenden Erfindung umfasst somit ein unvollständiges Personalisierungskommando sowie Personalisierungsdaten, mit denen das unvollständige Personalisierungskommando zu einem vollständigen Persoüalisierungskommando ergänzt und damit vervollständigt wird. Die ergänzenden Personalisierungsdaten können dabei sowohl benutzerunabhängige Personalisierungsdatenanteile als auch benutzerspezifische Personalisierungsdatenanteile umfassen, wobei letztere in der Regel überwiegen. Ein ergänztes, d.h. vollständiges Personalisierungskommando kann dann durch die dem unvollständigen Personalisierungskommando zugeordnete Funktionalität des Datenträgers mit Bezug auf die ergänzenden Personalisierungsdaten ausgeführt werden. Ein APDU-Kommando für Chipkarten gemäß ISO 7816 umfasst einen Kommandotyp (in den Bytes CLA und INS), Parameterdaten (in den Bytes P1, P2), Längendaten (L_c) sowie die eigentlichen Daten (DATA). Als ein unvollständiges Personalisierungskommando gemäß der vorliegenden Erfindung wird der Anteil empfangen, der durch den Kommandotyp und die Parameterdaten gebildet wird. Bei vorgegebener Länge der Daten können auch die Längendaten enthalten sein. Die Personalisierungsdaten werden dann durch die eigentlichen Daten gebildet. Ist dagegen die Länge der Daten variabel (benutzerabhängig), umfassen die Personalisierungsdaten die Längendaten, welche die Länge der zu übergebenden Daten angeben und somit direkt von diesen abhängen, und die zu übergebenden Daten selbst. Diese Daten werden getrennt von dem unvollständigen Personalisierungskommando in einem separaten Schritt empfangen. Das um die Personalisierungsdaten ergänzte Personalisierungskommando, im Beispiel das vollständige APDU-Kommando, könnte dann durch eine (dem Kommandotyp zugeordnete) Funktionalität des Datenträgers ausgeführt werden.

Als Personalisierungskommandos im Sinne der vorliegenden Erfindung gelten alle Kommandos, die in der Personalisierungsphase eines portablen Datenträgers Anwendung finden können. Dies können einerseits Standardkommandos sein, beispielsweise im Zusammenhang mit portablen Datenträgern bekannte Kommandos wie SELECT, UPDATE BINARY, UPDATE RECORD, WRITE und dergleichen. Diese Kommandos können auch nach Abschluss der Personalisierungsphase von dem Datenträger empfangen werden. Andererseits können als Personalisierungskommandos spezifische, nur während der Personalisierungsphase verwendbare Kommandos empfangen werden, beispielsweise ein PERSONALIZE-Kommando.

Die Personalisierungsdaten können benutzerspezifische und benutzerunabhängige Personalisierungsdatenanteile umfassen. Dabei beziehen sich benutzerspezifische Personalisierungsdatenanteile in der Regel auf einen konkreten, späteren Nutzer des Datenträgers und unterscheiden sich demnach von Datenträger zu Datenträger. Solche benutzerspezifischen Personalisierungsdaten ergänzen beispielsweise ein als unvollständiges Kommando empfangenes PERSONALIZE- oder WRITE-Kommando. Benutzerunabhängige Personalisierungsdaten können demgegenüber solche Daten sein, die zwar während der Personalisierungsphase verarbeitet werden, aber zumindest für eine bestimmte Charge von Datenträgern identisch sind. Sollen beispielsweise während der Personalisierungsphase benutzerspezifische Daten, z.B. der Name des späteren Nutzers des Datenträgers, in eine dazu vorgesehene Datei "name-file" geschrieben werden, so muss diese Datei zuvor mittels eines SELECT-Kommandos ausgewählt werden, bevor mittels eines WRITE-Kommandos die den Namen betreffenden Daten in die Datei "name-file" geschrieben werden können. Die Datei selbst wird aber für alle Datenträger einer Charge von gleichartigen Datenträgern die gleiche sein, weshalb die Angabe der Datei "name-file", welche ein unvollständiges SELECT-Kommando als Persorialisierungsdaten ergänzt und damit vervollständigt, als ein benutzerunabhängiger Personalisierungsdatenanteil angesehen werden kann.

Um die während der Personalisierungsphase zu übertragende Datenmenge weiter zu verringern, können - zusammen mit den unvollständigen Personalisierungskommandos - auch bereits mit benutzerunabhängigen Personalisierungsdatenanteilen ergänzte vollständige Personalisierungskommandos, wie beispielsweise das vorstehend beschriebene, mittels der Datei-Angabe ergänzte SELECT-Kommando, empfangen werden. Ein solches bereits vollständiges Personalisierungskommando muss dann beim Verarbeiten der Personalisierungsdaten lediglich noch ausgeführt werden.

Benutzerspezifische Personalisierungsdatenanteile werden aber stets getrennt von den unvollständigen und den vorstehend beschriebenen, benutzerunabhängig ergänzten vollständigen Personalisierungskommandos empfangen.

Die Personalisierungskommandos werden von dem Datenträger in einem separaten, von dem zweiten, benutzerspezifischen Empfangsschritt verschiedenen ersten benutzerunabhängigen Empfangsschritt, eventuell in einer anderen Phase der Herstellung des Datenträgers, empfangen und in einem Speicher des Datenträgers gespeichert. Dieser erste, benutzerunabhängige Empfangsschritt wird dem zweiten, benutzerspezifischen Empfangsschritt in der Regel, aber nicht zwingend, vorangehen. Die jeweilige Datenübertragung auf den Datenträger wird in dem benutzerunabhängigen und dem benutzerspezifischen Empfangsschritt in der Regel mittels jeweils unterschiedlicher Einrichtungen und unterschiedlicher Verfahren vorgenommen. D.h. der Datenträger empfängt die Personalisierungskommandos und zumindest die benutzerspezifischen Personalisierungsdaten zeitlich getrennt von verschiedenen Maschinen, die mittels unterschiedlicher Datenübertragungsverfahren auf die Übertragung von gleichartigen Personalisierungskommandos oder datenträgerindividuellen Personalisierungsdaten abgestimmt sind.

Ein erfindungsgemäßer Datenträger umfasst dementsprechend einen Prozessor, einen Speicher, eine Datenkommunikationsschnittstelle sowie eine auf dem Prozessor ausführbare Personalisierungsapplikation, welche eingerichtet ist, über die Datenkommunikationsschnittstelle unvollständige Personalisierungskommandos sowie, getrennt von den Personalisierungskommandos, Personalisierungsdaten zu empfangen. Die Personalisierungsapplikation ist weiter eingerichtet, die Personalisierungsdaten durch Ergänzen der unvollständigen Personalisierungskommandos mit den Personalisierungsdaten und durch Ausführen der ergänzten Personalisierungskommandos zu verarbeiten.

Die Personalisierungsapplikation auf dem Datenträger ist also derart eingerichtet, dass sie die in einem benutzerspezifischen Empfangsschritt von dem Datenträger empfangenen Personalisierungsdaten gemäß den in einem separaten, benutzerunabhängigen Empfangsschritt empfangenen unvollständigen Personalisierungskommandos verarbeiten kann, ohne dass es dazu notwendig wäre, dass der Datenträger die Personalisierungskommandos zusammen mit den Personalisierungsdaten, also als vollständige Personalisierungskommandos, in einem gemeinsamen Empfangsschritt empfängt. Das heißt, die Personalisierungsapplikation ist erfindungsgemäß dahingehend angepasst, die bestimmungsgemäße Zuordnung von in den verschiedenen Empfangsschritten durch den Datenträger empfangenen unvollständigen Personalisierungskommandos zu diese unvollständigen Kommandos ergänzenden Personalisierungsdaten zu erkennen und vorzunehmen, damit mittels der jeweiligen Personalisierungskommandos die "richtigen" zugeordneten, d.h. ergänzenden, Personalisierungsdaten verarbeitet werden. Die Verarbeitung der Personalisierungsdaten gemäß den Personalisierungskommandos kann prinzipiell wie bekannt erfolgen.

Der Datenträger wird somit personalisiert, indem dessen Personalisierungsapplikation die Personalisierungsdaten durch Ausführen der ergänzten Personalisierungskommandos, d.h. mit Bezug auf die den einzelnen unvollständigen Personalisierungskommandos jeweils zugeordneten Personalisierungsdaten, welche die unvollständigen Personalisierungskommandos ergänzen und damit vervollständigen, verarbeitet. Ein Personalisierungskommando kann z.B. angeben, dass zunächst eine bestimmte Datei auf dem zu personalisierenden Datenträger geöffnet werden soll, um nachfolgend durch ein weiteres Personalisierungskommando die passenden Personalisierungsdaten in die geöffnete Datei einzubringen. Auf diese Weise sind jedem Personalisierungskommando bestimmte, von demselben durch Ausführen zu verarbeitende Personalisierungsdaten zugeordnet. Dem Personalisierungskommando zum Öffnen einer Datei sind beispielsweise der Name oder eine Pfadangabe der zu öffnenden Datei zugeordnet. Dem Personalisierungskommando zum Einschreiben von Daten in die geöffnete Datei sind entsprechend die einzuschreibenden Daten selbst zugeordnet.

Anstelle der benutzerunabhängigen Personalisierungskommandos, die sich jeweils auf einzelne Personalisierungsdaten beziehen, können auch allgemein benutzerunabhängige Verarbeitungsdaten verwendet werden. Diese können beispielsweise das Konzept der Personalisierungskommandos dahingehend erweitern, dass bestimmte Verarbeitungsdaten Geltung für die Verarbeitung einer Mehrzahl von Personalisierungsdaten haben. Dadurch ließe sich das Volumen der von dem Datenträger in dem benutzerunabhängigen Empfangsschritt zu empfangenden Daten zusätzlich verringern und die Verarbeitung der Personalisierungsdaten durch den Datenträger weiter vereinfachen.

Vorzugsweise werden die Personalisierungskommandos in dem ersten, benutzerunabhängigen Empfangsschritt in einer vorgegebenen Reihenfolge in Form einer Sequenz von Personalisierungskommandos von dem Datenträger empfangen, so dass sich aus der empfangenen Sequenz direkt die Bearbeitungsreihenfolge der in einem Speicher des Datenträgers abgelegten Personalisierungskommandos durch die Personalisierungsapplikation ergibt. Diese Bearbeitungsreihenfolge muss dann nicht erst durch die Personalisierungsapplikation, beispielsweise durch einen Sortiervorgang, ermittelt werden, sondern sie ist bereits durch die empfangene Sequenz vorgegeben.

Gemäß dieser Ausführungsform werden dementsprechend auch die in dem zweiten, benutzerspezifischen Empfangsschritt von dem Datenträger empfangenen Personalisierungsdaten derart in dem Speicher des Datenträgers gespeichert, dass sie die Sequenz der Personalisierungskommandos in der vorgegebenen Reihenfolge als auszuführende Daten ergänzen. Dies bedeutet, dass die Personalisierungsapplikation die Zuordnung von Personalisierungsdaten zu Personalisierungskommandos der bereits gespeicherten Sequenz von Personalisierungskommandos nicht erst vornehmen muss, sondern dass sich diese Zuordnung direkt aus der auf die Sequenz der Personalisierungskommandos abgestimmte Speicherung der empfangenen Personalisierungsdaten ergibt, beispielsweise aus vorgegebenen Adressabständen der jeweiligen Speicherbereiche, die ein Personalisierungskommando und die von diesem auszuführenden Personalisierungsdaten umfassen.

Gleichfalls ist es möglich, zuerst die Personalisierungsdaten als eine geordnete Datenfolge auf den Datenträger zu übertragen und nachfolgend diese Datenfolge durch eine entsprechend geordnete Sequenz von Personalisierungskommandos zu ergänzen, wobei sich die Zuordnung eines Personalisierungskommandos zu den entsprechenden auszuführenden Personalisierungsdaten wiederum direkt aus der Speicherung der empfangenen Personalisierungsdaten und -kommandos in dem Speicher des Datenträgers ergibt.

Vorzugsweise, insbesondere wenn als Datenträger eine Chipkarte personalisiert wird, führt der Datenträger den ersten, benutzerunabhängigen Empfangsschritt des Empfangens der Personalisierungskommandos im Rahmen einer Initialisierung durch, d.h. während einer Initialisierungsphase des Datenträgers durch den Datenträgerhersteller. Der zweite, benutzerspezifische Empfangsschritt, in dem der Datenträger Personalisierungsdaten empfängt, erfolgt dann in einer nachfolgenden Personalisierung, d.h. während einer Personalisierungsphase des Datenträgers durch den Datenträgerhersteller oder -herausgeber. In einer Initialisierungsphase wird, wie bereits erwähnt, eine gesamte Charge von gleichartigen Datenträgern mit solchen Daten ausgestattet, welche für alle Datenträger dieser Charge identisch sind, d.h. mit benutzer- und datenträgerunabhängigen Daten. Derartige benutzerunabhängige Daten sind insbesondere die Personalisierungskommandos, da diese einen für die gesamte Charge von Datenträgern einheitlich auszuführenden Personalisierungsprozess steuern.

Aufgrund der Tatsache, dass diejenigen Einrichtungen und/oder Verfahren, die zur Initialisierung des Datenträgers eingesetzt werden, im Vergleich zu denen, die zur Personalisierung verwendet werden, aufgrund der Gleichartigkeit der verarbeiteten Daten in der Regel einen deutlich höheren Durchsatz aufweisen, wird gemäß dieser Ausführungsform also nicht nur die für die Personalisierungsphase benötigte Zeit verkürzt, sondern auch die Gesamtproduktionszeit des Datenträgers. Dies ist der Fall, da das Datenvolumen der benutzerunabhängigen Personalisierungskommandos in der Initialisierungsphase mit geringerem Zeitaufwand - wegen des höheren Durchsatzes der Initialisierungseinrichtungen im Vergleich zur Personalisierungseinrichtungen - auf den Datenträger übertragen werden kann als in der Personalisierungsphase, in welcher nun lediglich noch Personalisierungsdaten bzw. benutzerspezifische Daten in einen Speicher des Datenträgers eingebracht werden müssen.

Die Personalisierungskommandos können von dem Datenträger im ersten, benutzerunabhängigen Empfangsschritt, beispielsweise in der Initialisierungsphase, als Teil eines Speicherabbildes ("Image") empfangen werden. Auf diese Weise wird eine besonders effektive und zeitsparende Übertragung von benutzer- und datenträgerunabhängigen Daten, u.a. der benutzerunabhängigen Personalisierungskommandos, in den Speicher des Datenträgers erreicht, da in diesem Prozess keine herkömmliche, kommandogesteuerte Datenübertragung zwischen einer Initialisierungsmaschine und einer Vielzahl von Datenträgern erfolgt, sondern der Speicher des Datenträgers direkt auf Hardwareebene beschrieben wird. Mit dem Speicherabbild werden nicht nur Daten in den Speicher eingeschrieben, sondern auch sämtliche das Dateisystem betreffende Daten mit übertragen. Es kann also für die gesamte Charge gleichartiger Datenträger in einem Produktionsschritt ein Speicher identisch mit einer Dateisystemstruktur versehen und mit initialen Daten beschrieben werden, die als Dateien in dem Dateisystem vorliegen.

Gleichfalls ist es aber auch möglich, Personalisierungskommandos im benutzerunabhängigen Empfangsschritt mittels einer Datenkommunikation, beispielsweise zwischen einer Initialisierungsmaschine und dem Datenträger, auf den Datenträger zu übertragen. Dabei werden vorzugsweise alle oder zumindest eine Mehrzahl von Personalisierungskommandos mit Hilfe eines Container-Kommandos "verpackt" und als ein zusammenhängender, einzelner Datensatz von dem Datenträger empfangen und in dem Speicher gespeichert. Auf diese Weise kann einerseits Datenübertragungsvolumen im Vergleich damit eingespart werden, dass jedes Personalisierungskommando in einem separaten Datenübertragungsschritt mittels eines ebenfalls zu übertragenden separaten Kommandos einzeln in den Speicher des Datenträgers eingebracht wird. Andererseits wird auch der Verarbeitungsaufwand im Datenträger stark reduziert, da lediglich ein Datensatz, nämlich die mittels des Container-Kommandos verpackten Personalisierungskommandos, einmalig zu behandeln ist. In beiden vorstehend beschriebenen Ausführungsformen werden also insbesondere zwei oder mehr Personalisierungskommandos von dem Datenträger gleichzeitig, d.h. in einem Empfangsschritt, empfangen.

Analog werden vorzugsweise auch Personalisierungsdaten, also z.B. die die bereits übertragenen unvollständigen Personalisierungskommandos ergänzenden Personalisierungsdaten, im zweiten benutzerspezifischen Empfangsschritt mittels eines oder mehrerer Container-Kommandos auf den Datenträger übertragen und von diesem nachfolgend in dem Speicher gespeichert. Auch hier empfängt der Datenträger zwei oder mehr Personalisierungsdatensätze, die jeweils vorgesehen sind, entsprechend viele Personalisierungskommandos zu ergänzen, gleichzeitig, d.h. in einem Empfangsschritt.

Wie bereits vorstehend erwähnt, können die Personalisierungsdaten selbst noch einmal in einen benutzerspezifischen Personalisierungsdatenanteil und einen benutzerunabhängigen Personalisierungsdatenanteil unterteilt werden, so dass von dem Datenträger in dem ersten, benutzerunabhängigen Empfangsschritt empfangene unvollständige Personalisierungskommandos einerseits benutzerspezifische Personalisierungsdaten verarbeiten und andererseits benutzerunabhängige Personalisierungsdaten verarbeiten. Insofern kann es für diejenigen unvollständigen Personalisierungskommandos, die benutzerunabhängige Personalisierungsdaten verarbeiten, vorteilhaft sein, wenn die entsprechend zu verarbeitenden (benutzerunabhängigen) Personalisierungsdatenanteile auch bereits im benutzerunabhängigen Empfangsschritt zusammen mit den jeweiligen unvollständigen Personalisierungskommandos von dem Datenträger empfangen werden. Gemäß dieser Ausführungsform werden also neben den unvollständigen Personalisierungskommandos auch durch benutzerunabhängige Personalisierungsdaten ergänzte vollständige Personalisierungskommandos in einem effizienteren benutzerunabhängigen Empfangsschritt auf eine Vielzahl von Datenträgern übertragen.

Benutzerunabhängige Personalisierungsdaten sind, wie bereits erwähnt, beispielsweise solche Personalisierungsdaten, die für eine bestimmte Charge von Datenträgern identisch sind, wie z.B. Dateinamen oder Pfadangaben von zu öffnenden Dateien auf Datenträgern mit identischen Dateisystemen. Auf diese Weise wird das während des zweiten, benutzerspezifischen Empfangsschrittes zu übertragende Datenvolumen, welches diese benutzerunabhängigen Personalisierungsdaten nicht mehr umfasst, nochmals verringert werden.

Erfindungsgemäße Datenträger können beispielsweise als Chipkarten, z.B. für den elektronischen Zahlungsverkehr, zur Authentisierung oder zur Zutrittskontrolle, als (U)SIM-Mobilfunkkarten, als USB-Token, als Ausweisdokumente und dergleichen ausgebildet sein.

Nachfolgend wird die Erfindung mit Bezug auf die beiliegenden Zeichnungen beispielhaft beschrieben. Darin zeigen:
- Figur 1: eine bevorzugte Ausführungsform eines erfindungsgemäßen Datenträgers; und
- Figur 2: Schritte einer bevorzugten Ausführungsform des erfindungs- gemäßen Verfahrens.

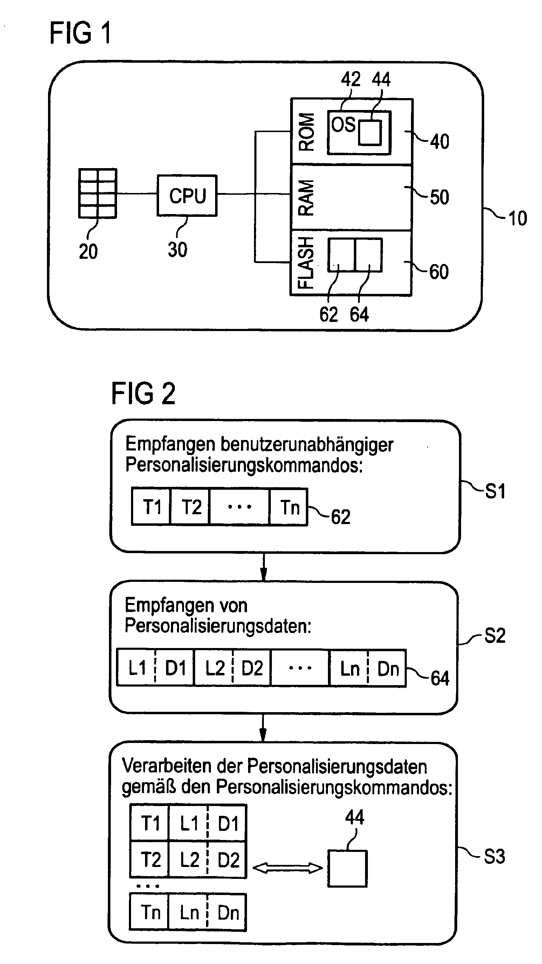

Mit Bezug auf Fig. 1 umfasst ein Datenträger 10, der hier als Chipkarte ausgebildet ist, eine Datenkommunikationsschnittstelle 20, einen Prozessor (CPU) 30 und verschiedene Speicher 40, 50 und 60. Der Datenträger 10 kann auch in anderer Gestalt ausgebildet sein, z.B. als USB-Token, als (U)SIM-Mobilfunkkarte, als Ausweisdokument oder dergleichen.

Die Datenkommunikationsschnittstelle 20 ist als Kontaktfeld gemäß ISO 7816 ausgebildet und dient zur Datenkommunikation mit einer externen Datenverarbeitungseinrichtung (nicht dargestellt), z.B. einem Kartenterminal, sowie zur Energieversorgung des Datenträgers 10. Alternativ oder zusätzlich kann der Datenträger 10 auch über eine eigene Energieversorgung (nicht dargestellt) verfügen, z.B. über eine Batterie. Auch andere kontaktbehaftete Schnittstellen können vorgesehen sein. Alternativ oder zusätzlich kann auch eine Kontaktlos-Datenkommunikationsschnittstelle (nicht dargestellt) zur kontaktlosen Datenkommunikation vorgesehen sein, z.B. eine Antenne.

In dem nicht flüchtigen Speicher 40 liegt ein Betriebssystem (OS) 42, welches den Datenträger 10 steuert. Der Speicher 40 kann ein nicht beschreibbarer ROM-Speicher oder ein Flash-Speicher sein. Das Betriebssystem 42 umfasst eine Personalisierungsapplikation 44, mittels derer der Datenträger 10, wie nachstehend mit Bezug auf Figur 2 detailliert beschrieben, personalisiert wird. Die Personalisierungsapplikation 44 muss nicht Teil des Betriebssystems 42 sein, sondern kann auch lediglich von diesem aktiviert werden. Der RAM-Speichers 50 dient dem Datenträger 10 als flüchtiger Arbeitsspeicher.

Alternativ kann das Betriebssystem 42 oder zumindest Teile davon, wie z.B. die Personalisierungsapplikation 44, in dem wiederbeschreibbaren, nicht flüchtigen FLASH-Speicher 60, der alternativ auch als EEPROM-Speicher oder dergleichen ausgebildet sein kann, gespeichert sein. Der FLASH-Speicher 60 stellt Bereiche zum Speichern weiterer Applikationen und zum Speichern von Daten, wie z.B. nachstehend beschriebener Personalisierungskommandos 62 und Personalisierungsdaten 64, bereit.

Mit Bezug auf Figur 2 wird im Folgenden eine bevorzugte Ausführungsform eines Verfahrens in dem Datenträger 10 zum Personalisieren des Datenträgers 10 beschrieben.

Während einer Initialisierungsphase empfängt der Datenträger 10 in einem ersten, so genannten benutzerunabhängigen Empfangsschritt S1 unvollständige Personalisierungskommandos 62. Format und Zweck der Personalisierungskommandos 62 werden nachstehend mit Bezug auf Schritt S3 genauer beschrieben. Der Schritt S1 wird durch eine Initialisierungsmaschine unterstützt (nicht gezeigt), mittels derer die Personalisierungskommandos 62 in der betrachteten Ausführungsform über die Datenkommunikationsschnittstelle 20 des Datenträgers 10 in den Speicher 60 des Datenträgers 10 eingebracht werden. Dazu werden die Personalisierungskommandos 62 mittels eines Container-Kommandos "verpackt" und als ein einziger Datensatz auf den Datenträger 10 übertragen und durch den Datenträger 10 in dem Speicher 60 gespeichert. Ist der Datenträger 10 beispielsweise als (U)SIM-Mobilfunkkarte ausgebildet, so kann als Container-Kommando das bekannte ENVELOPE-Kommando verwendet werden. Zum temporären Speichern der Personalisierungskommandos 62 dient allgemein ein Bereich des Speichers 60, der zu diesem Zeitpunkt im Lebenszyklus des Datenträgers 10 nicht anderweitig benötigt wird. Im Falle einer (U)SIM-Mobilfunkkarte kann zum Speichern der Personalisierungskommandos 62 beispielsweise die Datei EF_SMS verwendet werden oder alternativ ein so genannter "Concatenation Buffer", welcher der Karte später im Betrieb zum Puffern einer Mehrzahl von SMS-Nachrichten dient.

In einer alternativen Ausführungsform können die Personalisierungskommandos 62 im Schritt S1 auch als Teil eines Speicherabbildes ("Image") direkt in den Speicher 60 des Datenträgers 10 eingebracht werden. Dabei erfolgt in der Regel keine Datenübertragung über die Datenkommunikationsschnittstelle 20. Der Speicher 60 des Datenträgers 10 wird dabei mittels einer geeignet eingerichteten Initialisierungsmaschine direkt auf einer Hardwareebene angesprochen.

Prinzipiell kann die temporäre Speicherung der Personalisierungskommandos 62 auch in einem flüchtigen Speicher, wie dem RAM-Speicher 50 erfolgen.

In einem zweiten, so genannten benutzerspezifischen Empfangsschritt S2 empfängt der Datenträger 10 über die Datenkommunikationsschnittstelle 20 Personalisierungsdaten 64. Mittels dieser Daten wird der Datenträger 10 für seinen späteren Benutzer individualisiert. Ein Format der Personalisierungsdaten 64 sowie eine Durchführung der endgültigen Personalisierung des Datenträgers 10 werden nachfolgend mit Bezug auf den Schritt S3 beschrieben. Der Schritt S2 erfolgt während einer Personalisierungsphase des Datenträgers 10 und wird durch eine Personalisierungsmaschine (nicht gezeigt) unterstützt. Wie schon vorstehend mit Bezug auf die Personalisierungskommandos 62 beschrieben, werden auch die Personalisierungsdaten 64 mittels eines Container-Kommandos in den Speicher 60 des Datenträgers 10 eingebracht. In der beschriebenen Ausführungsform werden die Personalisierungsdaten 64 in derselben Datei in dem Speicher 60 gespeichert wie die Personalisierungskommandos 62. Es ist jedoch auch möglich, die Personalisierungsdaten 64 an einer anderen Stelle im Speicher 60 (temporär) zu speichern.

Prinzipiell können die Schritte S1 und S2 auch vertauscht werden, wenn dies für die Herstellung eines entsprechenden Datenträgers 10 vorteilhaft ist. Genauso können die Maschinen und Verfahren, mittels derer die Personalisierungsdaten 64 und die Personalisierungskommandos 62 in den Speicher 60 (oder einen weiteren nichtflüchtigen Speicher) des Datenträgers 10 eingebracht werden, an die Notwendigkeiten im Zusammenhang mit der Herstellung des Datenträgers 10 sowie an die spezifische Formen und Ausgestaltungen des Datenträgers 10 angepasst werden.

In Schritt S3 wird der Datenträger 10 personalisiert, indem die Personalisierungsdaten 64 gemäß den Personalisierungskommandos 62 von der Personalisierungsapplikation 44 des Datenträgers 10 verarbeitet werden, d.h. die Personalisierungsapplikation 44 führt die mit dem Personalisierungsdaten 64 ergänzten Personalisierungskommandos 62 aus. In der beschriebenen Ausführungsform repräsentieren die Personalisierungskommandos 62 eine Sequenz von unvollständigen Personalisierungskommandos T1, T2, ..., Tn. Jedem dieser unvollständigen Kommandos Ti ist auf Seiten der Personalisierungsdaten 64 ein Personalisierungsdatensatz (Li, Di) zugeordnet, der das unvollständige Kommando ergänzt und damit vervollständigt, wobei Li jeweils die Länge des Datensatzes Di angibt. Jede andere geeignete Codierung kann verwendet werden. Durch Ausführen der ergänzten Personalisierungskommandos T1, L1, D1; T2, L2, D2; ..., Tn, Ln, Dn werden Personalisierungsdaten in Form einzelner Datensätze Di an die vorgesehenen Stellen in einem Dateisystem des Datenträgers 10 geschrieben, wodurch der Datenträger 10 schließlich personalisiert wird. Nach dem Ausführen der Personalisierungskommandos T1, T2, ..., Tn können diese wieder aus dem Speicher 60 gelöscht werden, wodurch der von den Kommandos eingenommene Speicherplatz wieder verfügbar wird. Auch der Speicherplatz, der zum erstmaligen Speichern der Personalisierungsdaten 64 (in Schritt S2) verwendet wurde, kann nach dem Verarbeiten der Personalisierungsdaten 64 gemäß den Personalisierungskommandos 62 in der Regel wieder freigegeben werden.

Der Datenträger 10 empfängt die unvollständigen Personalisierungskommandos T1, T2, ..., Tn als Sequenz von Kommandos bereits in der Reihenfolge, in welcher diese nachfolgend durch die Personalisierungsapplikation 44 ausgeführt werden. Die Personalisierungsdaten in Form der Datensätze (L1, D1), (L2, D2), ..., (Ln, Dn) ergänzen diese Sequenz und werden dazu derart in derselben Datei wie die Personalisierungskommandos T1, T2, ..., Tn gespeichert, dass sich die Zuordnung eines Datensatzes (Li, Di) zu einem Kommando Ti für die Personalisierungsapplikation 44 direkt aus den jeweiligen Speicheradressen, an denen die Kommandos Ti bzw. die Datensätze (Li, Di) gespeichert sind, ergibt. Andere Ausführungsformen sind möglich. Z.B. kann es vorgesehen sein, dass die korrekte Reihenfolge der Ti durch die Personalisierungsapplikation 44 erst hergestellt wird, indem diese die unvollständigen Kommandos gemäß einer definierten Nummerierung sortiert. In ähnlicher Weise ist es möglich, dass Personalisierungsdatensätze (Li, Di) in Schritt S2 ungeordnet in den Speicher 60 eingebracht werden und erst die Personalisierungsapplikation 44 eine korrekte Zuordnung der Personalisierungsdaten 64 zu den unvollständigen Personalisierungskommandos 62, also speziell der Datensätze (Li, Di) zu den Kommandos Ti, erkennt und durchführt.

Ein unvollständiges Personalisierungskommando Ti zusammen mit einem dieses unvollständige Kommando ergänzenden, zugeordneten Personalisierungsdatensatz (Li, Di) wird nun als vollständiges Personalisierungskommando, in der korrekten Reihenfolge mit Bezug auf die restlichen Kommandos Tj, von der Personalisierungsapplikation 44 ausgeführt. Das Format der Kommandos Ti sowie der Datensätze (Li, Di) kann dabei variieren. Im Zusammenhang mit Chipkarten gemäß ISO 7816 werden zur Datenkommunikation zwischen der Chipkarte und einem Lesegerät, z.B. einer Personalisierungsmaschine, Kommandos in Form von APDUs ("application protocol data units") verwendet. Eine APDU hat ein vorgegebenes Format, welches aus einem Kopfteil ("header") und einem Datenteil besteht. Der Kopfteil kann dabei z.B. dem unvollständigen Personalisierungskommando Ti entsprechen, der Datenteil dem Personalisierungsdatensatz (Li, Di). Entsprechen die Datensätze Ti und (Li, Di) also den Anforderungen an die Codierungskonventionen einer APDU, so kann das unvollständige Kommando Ti, nachdem der Datensatz (Li, Di), wie vorstehend beschrieben, in geeigneter Weise zugeordnet worden ist, als ergänztes und somit vollständiges Kommando mittels einer Applikation ausgeführt werden, die lediglich eingerichtet ist, vollständige Kommandos in Form von APDUs auszuführen. Eine solche Applikation, z.B. in Form eines Toolkit-Interpreters für (U)SIM-Mobilfunkkarten, kann somit in einfacher Weise als Teil der Personalisierungsapplikation 44 eingesetzt werden.

Um das Datenvolumen, welches zur Personalisierung auf den Datenträger 10 zu übertragen ist, weiter zu minimieren, können gemäß einer speziellen Ausführungsform des Verfahrens anstatt standardisierter Personalisierungskommandos 62 und Personalisierungsdatensätze 64 (wie z.B. APDUs) bezüglich Datenvolumen optimierte Datenformate gewählt werden. Diese Datenformate können beispielsweise TLV-codiert sein (TLV = "tag, length, value"), wobei ein so genannter "Tag" für ein Kommando steht, welches für einen Datensatz "value" einer gegebenen Länge "length" auszuführen ist. Insofern können die vorstehend beschriebenen unvollständigen Personalisierungskommandos Ti mit Bezug auf die Personalisierungsdatensätze (Li, Di) als optimierte TLV-codierte Datensätze angesehen werden. Dabei kann ein "Tag" 0xA4 beispielsweise für ein unvollständiges Kommando "SELECT" stehen, mittels dessen eine zu bestimmende Datei, "FILE", ausgewählt wird. Die Dateiangabe "FILE" ergänzt das SELECT-Kommando zu einem vollständigen Kommando. Mittels eines nachfolgenden unvollständigen Kommandos "UPDATE BINARY", welchem ein "Tag" 0xD6 zugeordnet sein kann, wird dann ein definierter Datensatz einer vorgegebenen Länge, welcher als Personalisierungsdatenanteil das unvollständige Kommando ergänzt, in die ausgewählte Datei eingebracht.

Gemäß einer weiteren speziellen Ausführungsform können einzelne unvollständige Personalisierungskommandos Ti bereits ergänzt um diese unvollständigen Kommandos ergänzende Personalisierungsdatensätze (Li, Di), d.h. in Form ergänzter und somit vollständiger Personalisierungskommandos, in Schritt S1 in den Datenträger 10 eingebracht werden. Dies ist für solche Personalisierungsdatensätze (Li, Di) sinnvoll, die nicht von dem späteren Benutzer des Datenträgers 10 abhängen. D.h. diese Personalisierungsdatensätze sind benutzerunabhängig im Gegensatz zu anderen, benutzerspezifischen Personalisierungsdatensätzen. Ein Beispiel für einen solchen benutzerunabhängigen Personalisierungsdatensatz (Li, Di) ist, im Zusammenhang mit der beschriebenen Ausführungsform, die Angabe einer Datei, die zu öffnen ist, um dort benutzerspezifische Personalisierungsdaten (L(i+1), D(i+1)) einzuschreiben. Diese Datei, d.h. deren Name bzw. deren Pfad innerhalb der Dateisystemstruktur des Datenträgers 10, ist im Allgemeinen für eine Charge gleichartiger Datenträger 10 die gleiche, unabhängig von dem individuellen, benutzerspezifischen Personalisierungsdatensatz, der schließlich für jeden Datenträger 10 in diese Datei geschrieben wird. Um das Beispiel des vorhergehenden Absatzes aufzunehmen, können beispielsweise die Datensätze (Li, Di), welche einem "Tag" 0xA4, d.h. einem unvollständigen "SELECT"-Kommando, zugeordnet sind, direkt in Schritt S1 als benutzerunabhängige Personalisierungsdatenanteile zusammen mit dem "Tag", also bereits als ergänzte, vollständige Personalisierungskommandos, in den Speicher 60 eingebracht werden, sofern für den Datenträger 10 bereits feststeht, welche Dateien in welcher Reihenfolge auszuwählen sind. Das in Schritt S2 zu übertragende Datenvolumen reduziert sich dementsprechend. Die Personalisierungsapplikation 44 erkennt diese Variante beispielsweise daran, dass der (benutzerunabhängige) Personalisierungsdatensatz (Li, Di) in Schritt S1 bereits an der korrekten Speicherstelle gespeichert worden ist, an der dieser nach Schritt S2 erwartet worden wäre. In einer anderen Ausführungsform kann im Schritt S2 - an Stelle des Datensatzes (Li, Di) - lediglich ein Datensatz L'i übertragen werden, welcher z.B. ein Längenfeld der Länge 0xff codiert und welcher der Personalisierungsapplikation 44 damit signalisiert, dass der dem unvollständigen Kommando Ti zugeordnete Datensatz (Li, Di) bereits zusammen mit Ti in Schritt S1, also in Form eines ergänzten, vollständigen Kommandos, übertragen und entsprechend zusammen mit dem unvollständigen Kommando Ti gespeichert worden ist.

## Patentansprüche

1. Verfahren zur Personalisierung eines portablen Datenträgers (10), umfassend die folgenden Schritte in dem Datenträger (10):
- Empfangen (S1) von unvollständigen Personalisierungskommandos (62);
- Empfangen (S2) von Personalisierungsdaten (64) getrennt von den unvollständigen Personalisierungskommandos (62);
- Verarbeiten (S3) der Personalisierungsdaten (64) zur Personalisierung des Datenträgers (10) durch Ergänzen der unvollständigen Personalisierungskommandos (62) mit den Personalisierungsdaten (64) und Ausführen der ergänzten Personalisierungskommandos, wobei der Datenträger (10) die Personalisierungsdaten (64) in einem benutzerspezifischen Empfangsschritt (S2) und die Personalisierungskommandos zuvor in einem benutzerunabhängigen Empfangsschritt (S1) empfängt.

2. Verfahren nach Anspruch 1, **dadurch gekennzeichnet, dass** die Personalisierungsdaten (64) benutzerspezifische und/oder benutzerunabhängige Personalisierungsdatenanteile umfassen und dass zusammen mit den unvollständigen Personalisierungskommandos (62) auch bereits mit benutzerunabhängigen Personalisierungsdatenanteilen ergänzte vollständige Personalisierungskommandos (62) empfangen werden, welche beim Verarbeiten (S3) der Personalisierungsdaten lediglich noch ausgeführt werden.

3. Verfahren nach einem der Ansprüche 1 bis 2, **dadurch gekennzeichnet, dass** der Datenträger (10) die Personalisierungskommandos (62) als eine Sequenz von Personalisierungskommandos (T1, T2, ..., Tn) empfängt.

4. Verfahren nach Anspruch 3, **dadurch gekennzeichnet, dass** der Datenträger (10) die Personalisierungsdaten (L1, D1; L2, D2; ...; Ln, Dn) abgestimmt auf die Sequenz von Personalisierungskommandos (T1, T2, ..., Tn) empfängt.

5. Verfahren nach einem der Ansprüche 2 bis 3, **dadurch gekennzeichnet, dass** der Datenträger (10) die Personalisierungskommandos (62) in einem benutzerunabhängigen Empfangsschritt (S1) im Rahmen einer Initialisierung des Datenträgers (10) empfängt und zumindest die benutzerspezifischen Personalisierungsdatenanteile der Personalisierungsdaten in einem benutzerspezifischen Empfangsschritt (S2) nachfolgend im Rahmen einer Personalisierung des Datenträgers (10) empfängt.

6. Verfahren nach einem der Ansprüche 1 bis 5, **dadurch gekennzeichnet, dass** der Datenträger (10) die Personalisierungskommandos (62) als Teil eines Speicherabbilds des Datenträgers (10) empfängt.

7. Verfahren nach einem der Ansprüche 1 bis 5, **dadurch gekennzeichnet, dass** der Datenträger (10) die Personalisierungskommandos (62) mittels eines Container-Kommandos empfängt.

8. Verfahren nach einem der Ansprüche 1 bis 7, **dadurch gekennzeichnet, dass** der Datenträger (10) die Personalisierungsdaten (64) mittels eines Container-Kommandos empfängt.

9. Verfahren nach einem der Ansprüche 1 bis 8, **dadurch gekennzeichnet, dass** jeweils ein Personalisierungsdatensatz (L1, D1; L2, D2; ...; Ln, Dn) aus den empfangenen Personalisierungsdaten (64) eines der empfangenen unvollständigen Personalisierungskommandos (62) ergänzt.

10. Verfahren nach einem der Ansprüche 1 bis 9, **dadurch gekennzeichnet, dass** jedem der empfangenen Personalisierungskommandos (T1; T2; ...;
Tn) eine auf dem Datenträger (10) ausführbare Funktionalität des Datenträgers (10) zugeordnet wird.

11. Portabler Datenträger (10), umfassend einen Prozessor (30), einen Speicher (60), eine Datenkommunikationsschnittstelle (20) sowie eine auf dem Prozessor (30) ausführbare Personalisierungsapplikation (44),welche eingerichtet ist, über die Datenkommunikationsschruttstelle (20) unvollständige Personalisierungskommandos (62) sowie, getrennt von den Personalisierungskommandos (62), Personalisierungsdaten (64) zu empfangen, und weiter eingerichtet ist, die Personalisierungsdaten (64) durch Ergänzen der unvollständigen Personalisierungskommandos (62) mit den Personalisierungsdaten (64) und durch Ausführen der ergänzten Personalisierungsdaten (62, 64) zu verarbeiten, wobei die Personalisierungsapplikation weiter angepasst ist, die Personalisierungsdaten (64) in einem benutzerspezifischen Empfangsschritt und die Personalisierungskommandos zuvor in einem benutzerunabhängigen Empfangsschritt zu empfangen.

12. Datenträger (10) nach Anspruch 11, **dadurch gekennzeichnet, dass** die Personalisierungsapplikation (44) eingerichtet ist, auf dem Datenträger (10) ein Verfahren nach einem der Ansprüche 1 bis 11 durchzuführen.

13. Datenträger (10) nach Anspruch 11 oder 12, **dadurch gekennzeichnet, dass** der Datenträger (10) als Chipkarte oder (U)SIM-Mobilfunkkarte oder USB-Token oder Ausweisdokument ausgebildet ist.

## Claims

1. A method for personalizing a portable data carrier (10), comprising the following steps in the data carrier (10):
- receiving (S1) incomplete personalization commands (62);
- receiving (S2) personalization data (64) separately from the incomplete personalization commands (62);
- processing (S3) the personalization data (64) for personalizing the data carrier (10) by supplementing the incomplete personalization commands (62) with the personalization data (64) and executing the supplemented personalization commands, whereby the data carrier (10) receives the personalization data (64) in a user-specific receiving step (S2) and the personalization commands previously in a user-independent receiving step (S1).

2. The method according to claim 1, **characterized in that** the personalization data (64) comprise user-specific and/or user-independent personalization data portions, and that there are also received, together with the incomplete personalization commands (62), complete personalization commands (62) already supplemented with user-independent personalization data portions, which are merely executed upon processing (S3) of the personalization data.

3. The method according to either of claims 1 to 2, **characterized in that** the data carrier (10) receives the personalization commands (62) as a sequence of personalization commands (T1, T2, ..., Tn).

4. The method according to claim 3, **characterized in that** the data carrier (10) receives the personalization data (L1, D1; L2, D2; ...; Ln, Dn) coordinated with the sequence of personalization commands (T1, T2, ..., Tn).

5. The method according to either of claims 2 to 3, **characterized in that** the data carrier (10) receives the personalization commands (62) in a user-independent receiving step (S1) within the framework of an initialization of the data carrier (10), and receives at least the user-specific personalization data portions of the personalization data in a user-specific receiving step (S2) subsequently within the framework of a personalization of the data carrier (10).

6. The method according to any of claims 1 to 5, **characterized in that** the data carrier (10) receives the personalization commands (62) as part of a memory image of the data carrier (10).

7. The method according to any of claims 1 to 5, **characterized in that** the data carrier (10) receives the personalization commands (62) by means of a container command.

8. The method according to any of claims 1 to 7, **characterized in that** the data carrier (10) receives the personalization data (64) by means of a container command.

9. The method according to any of claims 1 to 8, **characterized in that** one personalization data set (L1, D1; L2, D2; ...; Ln, Dn) from the received personalization data (64) supplements one of the received incomplete personalization commands (62) in each case.

10. The method according to any of claims 1 to 9, **characterized in that** there is assigned to each of the received personalization commands (T1; T2; ...; Tn) a functionality of the data carrier (10) executable on the data carrier (10).

11. A portable data carrier (10), comprising a processor (30), a memory (60), a data communication interface (20), and a personalization application (44) executable on the processor (30), said application being set up to receive via the data communication interface (20) incomplete personalization commands (62) and, separately from the personalization commands (62), personalization data (64), and being further set up to process the personalization data (64) by supplementing the incomplete personalization commands (62) with the personalization data (64) and by executing the supplemented personalization data (62, 64), whereby the personalization application is further adapted to receive the personalization data (64) in a user-specific receiving step and the personalization commands previously in a user-independent receiving step.

12. The data carrier (10) according to claim 11, **characterized in that** the personalization application (44) is set up to carry out a method according to any of claims 1 to 11 on the data carrier (10).

13. The data carrier (10) according to claim 11 or 12, **characterized in that** the data carrier (10) is configured as a chip card or (U)SIM mobile communication card or USB token or identification document.

## Revendications

1. Procédé de personnalisation d'un support de données portable (10), comprenant les étapes suivantes dans le support de données (10):
- réception (S1) de commandes de personnalisation incomplètes (62);
- réception (S2) de données de personnalisation (64) séparément des commandes de personnalisation incomplètes (62);
- traitement (S3) des données de personnalisation (64) pour la personnalisation du support de données (10), complétant les commandes de personnalisation incomplètes (62) par les données de personnalisation (64) et exécutant les commandes de personnalisation complétées (62), le support de données (10) recevant les données de personnalisation (64) lors d'une étape de réception (S2) spécifique de l'utilisateur et recevant préalablement les commandes de personnalisation lors d'une étape de réception (S1) indépendante de l'utilisateur.

2. Procédé selon la revendication 1, **caractérisé en ce que** les données de personnalisation (64) comprennent des parts de données de personnalisation spécifiques de l'utilisateur et/ou indépendantes de l'utilisateur et **en ce que**, conjointement avec les commandes de personnalisation incomplètes (62), des commandes de personnalisation (62) complètes déjà complétées par des parts de données de personnalisation indépendantes de l'utilisateur sont aussi reçues, n'étant plus qu'exécutées lors du traitement (S3) des données de personnalisation.

3. Procédé selon une des revendications de 1 à 2, **caractérisé en ce que** le support de données (10) reçoit les commandes de personnalisation (62) en tant qu'une séquence de commandes de personnalisation (T1, T2, ..., Tn).

4. Procédé selon la revendication 3, **caractérisé en ce que** le support de données (10) reçoit les données de personnalisation (L1, D1; L2, D2; ...; Ln, Dn) de manière accordée à la séquence de commandes de personnalisation (T1, T2, ..., Tn).

5. Procédé selon une des revendications de 2 à 3, **caractérisé en ce que** le support de données (10) reçoit les commandes de personnalisation (62) lors d'une étape de réception (S1) indépendante de l'utilisateur dans le cadre d'une initialisation du support de données (10) et reçoit ensuite lors d'une étape de réception (S2) spécifique de l'utilisateur, dans le cadre d'une personnalisation du support de données (10), au moins les parts de données de personnalisation spécifiques de l'utilisateur des données de personnalisation.

6. Procédé selon une des revendications de 1 à 5, **caractérisé en ce que** le support de données (10) reçoit les commandes de personnalisation (62) en tant que partie d'une image mémoire du support de données (10).

7. Procédé selon une des revendications de 1 à 5, **caractérisé en ce que** le support de données (10) reçoit les commandes de personnalisation (62) au moyen d'une commande container.

8. Procédé selon une des revendications de 1 à 7, **caractérisé en ce que** le support de données (10) reçoit les données de personnalisation (64) au moyen d'une commande container.

9. Procédé selon une des revendications de 1 à 8, **caractérisé en ce que** c'est respectivement un jeu de données de personnalisation (L1, D1; L2, D2; ...; Ln, Dn) issu des données de personnalisation reçues (64) qui complète une des commandes de personnalisation incomplètes (62) reçues.

10. Procédé selon une des revendications de 1 à 9, **caractérisé en ce qu'**il est affecté à chacune des commandes de personnalisation reçues (T1, T2, ..., Tn) une fonctionnalité du support de données (10) exécutable sur le support de données (10).

11. Support de données portable (10), comprenant un processeur (30), une mémoire (60), une interface de communication de données (20) ainsi qu'une application (44) de personnalisation exécutable sur le processeur (30), laquelle application est configurée pour recevoir par l'intermédiaire de l'interface de communication de données (20) des commandes de personnalisation incomplètes (62) ainsi que, séparément des commandes de personnalisation (62), des données de personnalisation (64), et qui est en outre configurée pour traiter les données de personnalisation (64) en complétant les commandes de personnalisation incomplètes (62) par les données de personnalisation (64) et en exécutant les données de personnalisation complétées (62, 64), l'application de personnalisation étant en outre adaptée pour recevoir les données de personnalisation (64) lors d'une étape de réception spécifique de l'utilisateur et pour recevoir préalablement les commandes de personnalisation lors d'une étape de réception indépendante de l'utilisateur.

12. Support de données (10) selon la revendication 11, **caractérisé en ce que** l'application de personnalisation (44) est configurée pour exécuter sur le support de données (10) un procédé selon une des revendications de 1 à 11.

13. Support de données (10) selon la revendication 11 ou 12, **caractérisé en ce que** le support de données (10) est réalisé sous forme de carte à puce ou carte de téléphonie mobile (U)SIM ou token USB ou document d'identité.
